# EUROPÄISCHE PATENTSCHRIFT

(11) **EP 0 531 322 B1**
(45) Veröffentlichungstag und Bekanntmachung des Hinweises auf die Patenterteilung: **31.08.1994**
(21) Anmeldenummer: 91909189.2
(22) Anmeldetag: 22.05.1991
(51) Int. Cl.: G02B 21/06

(54) **UMSCHALTBARE DURCH- UND/ODER AUFLICHTBELEUCHTUNGSEINRICHTUNG**
REVERSIBLE DIRECT AND/OR TRANS-ILLUMINATION DEVICE
DISPOSITIF COMMUTABLE D'ECLAIRAGE PAR TRANSMISSION ET/OU PAR REFLEXION

(30) Priorität: 25.05.1990 DE 4016896
(43) Veröffentlichungstag der Anmeldung: 17.03.1993
(73) Patentinhaber: Leitz Messtechnik Gesellschaft mit beschränkter Haftung, D-35530 Wetzlar (DE)
(72) Erfinder: RICKLEFS, Ubbo, D-6349 Greifenstein-Ulm (DE)
(74) Vertreter: Knefel, Siegfried, Dipl.-Math.
(86) Internationale Anmeldenummer: DE9100414
(87) Internationale Veröffentlichungsnummer: WO9119218

(56) Entgegenhaltungen:
- EP-A- 0 087 574
- EP-A- 0 389 240
- Patent Abstracts of Japan, vol. 11, no. 32, (P-541)(2479) 30 January 1987 ; & JP-A-61 202 102

## Beschreibung

Die Erfindung betrifft eine optische Einrichtung zur wahlweisen Erzielung einer Durch- und/oder Auflichtbeleuchtung nach dem Oberbegriff des Anspruchs 1.

Aus der deutschen Patentschrift DE-PS 1 083 065 ist eine Einrichtung zur wahlweisen Erzielung einer Durch- und Auflichtbeleuchtung bekannt und speziell für die Verwendung in einem Mikroskop beschrieben. Dabei ist ein depolarisierender Reflektor in Form eines Vielfach-Tripelspiegels vorgesehen. Von Nachteil ist, daß durch die depolarisierende Wirkung sowohl das Auflicht- als auch das Durchlichtbild in seinem Kontrast erheblich geschwächt ist. Insbesondere kann bei der Auflichtbetrachtung das Durchlicht nicht vollständig abgeschaltet werden, was die Beobachtung von schwach reflektierenden Objekten unmöglich macht.

Es ist auch schon vorgeschlagen worden, bei einer derartigen Einrichtung ein λ/4 -Plättchen hinter das Objekt zu verlegen.

In der DE-A-32 04 686 ist dabei die Montage eines kompletten Autokollimationssystems aus λ/4 -Plättchen und Reflektor und zwei kompletten Mikroskopobjektiven hinter dem Objekt vorgesehen. Das Auflichtbild wird dabei stets ausgelöscht.

Dieses Autokollimationssystem stellt jedoch eine große Baugruppe dar (Durchmesser: ca. 10 cm, Länge: 40 - 50 cm) und müßte nachteiligerweise bei der Vermessung großflächiger Proben der über dem Objekt angeordneten Optik mit hoher Genauigkeit nachgeführt werden, was einen nicht praktikablen apparativen Aufwand unter dem Objekttisch erfordert. Ferner müßte der Objekttisch eine dem Objekt entsprechend großflächige Glasplatte besitzen, was bereits aus Gründen der Statik unrealisierbar ist, da der Objekttisch auch zur Aufnahme von (evtl. schweren) Auflichtobjekten geeignet sein muß.

Es ist die Aufgabe der Erfindung, ausgehend von einer gattungsgemäßen Einrichtung eine Einrichtung bereitzustellen, welche wahlweise bei Auflicht und/oder Durchlicht vollen Kontrast gewährleistet bei einfacher Konstruktion. Die Einrichtung soll zur Verwendung für die optische Antastung mit einer Mehrkoordinatenmeßmaschine und insbesondere für die Vermessung großflächiger Proben geeignet sein.

Bei einer gattungsgemäßen Einrichtung wird dies dadurch gelöst, daß der Reflektor im wesentlichen nicht depolarisierend wirkt und eine zweite die Polarisationsrichtung drehende Einrichtung zwischen Objekt und Reflektor angeordnet ist.

Vorteilhafte Weiterbildungen sind Gegenstand der Ansprüche 2 bis 7.

Entsprechend Anspruch 8 ist eine Einrichtung nach einem oder mehreren der Ansprüche 1 bis 7 geeignet zur aufgabengemäßen Verwendung für die optische Antastung großflächiger Objekte mit einer Mehrkoordinatenmeß-maschine. Dabei ist die Größe des Objekts nur durch die Abmessung der Mehrkoordinatenmeßmaschine begrenzt.

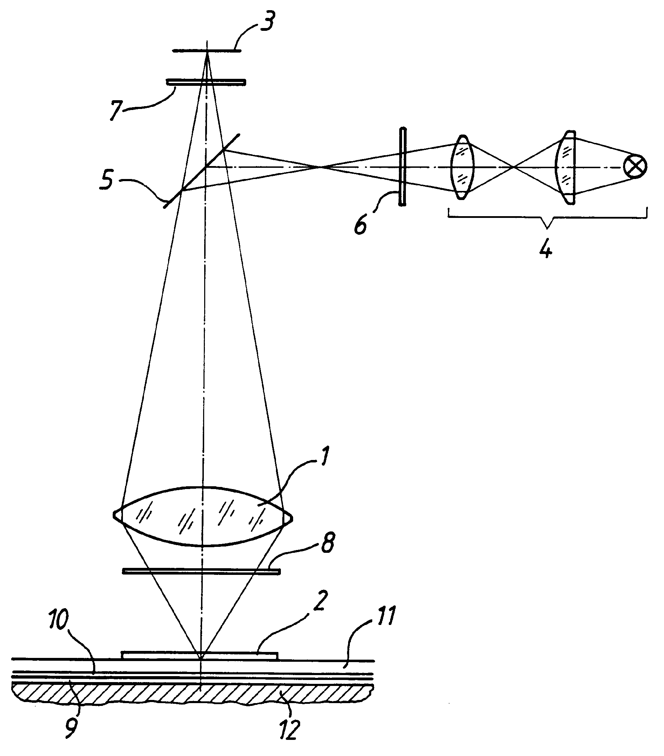

Die nähere Beschreibung der Erfindung benutzt die Zeichnung, welche einen schematischen Aufbau der optischen Einrichtung zur wahlweisen Erzielung einer Durch- und/oder Auflichtbeleuchtung eines Objektes darstellt.

Zunächst ist eine bekannte Abbildungseinrichtung vorgesehen, bei der ein Objektiv 1 das Bild eines Objektes 2 in einer Bildebene 3 erzeugt. In der Bildebene 3 kann ein Fotodetektor liegen oder mit einem Okular wird das Bild in der Bildebene 3 mit dem menschlichen Auge beobachtet. Eine Beleuchtungseinrichtung 4 in Verbindung mit einem Strahlteiler 5 ergänzt diese Abbildungseinrichtung in bekannter Weise zur Auflichtbauart. Solche Auflicht-Beleuchtungs- und Abbildungseinrichtungen sind unter anderem für Mikroskope, Makroskope und Mehrkoordinatenmeßmaschinen mit optischer Antastung gebräuchlich.

Wie auch in der DE-PS 1 083 065 wird die Einrichtung ergänzt durch einen Polarisator 6 im Beleuchtungsstrahlengang und einen dazu gekreuzten Analysator 7 im Abbildungsstrahlengang, sowie ein vorzugsweise zwischen Objektiv 1 und Objekt 2 angeordnetes λ/4 -Plättchen 8. Das λ/4 -Plättchen 8 kann auch zwischen Strahlteiler 5 und Objektiv 1 angeordnet sein und ist verstellbar, das heißt, es kann um die optische Achse des Objektivs 1 gedreht werden und/oder seitwärts aus dem Strahlengang in der Art eines Schiebers entfernt werden.

Das λ/4 -Plättchen 8 wird vom Licht auf dem Weg von der Beleuchtungseinrichtung 4 über das Objekt 2 zur Bildebene 3 zweimal durchlaufen. Ist die Hauptachse des λ/4 -Plättchens unter 45° gegen die Polarisationsrichtung des vom Polarisator 6 linear polarisierten Lichts gestellt, so bewirkt dies insgesamt eine Drehung der Polarisationsebene um 90° und bewirkt Durchlaß des Lichts durch den zum Polarisator 6 gekreuzten Analysator 7.

An der Oberseite des Objekts 2 reflektiertes Licht wird damit zur Bildebene 3 geleitet, das Auflichtbild entsteht. Ist das λ/4 -Plättchen, wie vorzugsweise ausgeführt, zwischen Objektiv 1 und Objekt 2 angeordnet, dann werden Reflexe an Objektivflächen durch den Analysator 7 unterdrückt, genauso wie alle im Bereich des Objekts 2 in ihrer Polarisation veränderten Lichtstrahlen.

Der hinter dem Objekt 2 angeordnete Reflektor 9 hat erfindungsgemäß keine depolarisierende Wirkung und ist mit einer λ/4 -Folie 10 belegt, deren Hauptachse unter 45° zur Polarisationsrichtung des Polarisators 6 ausgerichtet ist.

Der Reflektor 9 kann insbesondere als planer Metallspiegel oder als nicht depolarisierende handelsübliche Reflexfolie ausgeführt sein. Als Schutz vor mechanischer Beanspruchung ist die Oberfläche bei Bedarf mit einer Glasplatte 11 abgedeckt, auf der das Objekt 2 aufliegt.

Reflektor 9 mit λ/4 -Folie 10 und Glasplatte 11 sind auf dem gewöhnlichen Objekttisch 12, wie er z. B. für Mikroskope oder Mehrkoordinatenmeßmaschinen üblich ist, angebracht.

In der Stellung des λ/4 -Plättchens 8, das zum Auflichtbild des Objekts 2 führt, wird jetzt durch die kombinierte Wirkung des nicht depolarisierenden Reflektors 9 und der zweifach durchlaufenen λ/4 - Folie 10 Licht, welches an Kanten des Objekts 2 vorbei oder durch Durchbrüche des Objekts 2 hindurch zum Reflektor 9 und zurück bis zum Analysator 7 läuft, vollständig unterdrückt, da es durch die kombinierte Wirkung des λ/4 -Plättchens 8 und der zweiten λ/4-Folie 10 insgesamt um 180° oder 0° in der Polarisationsrichtung gedreht und so vom Analysator 7 vollständig blockiert wird. Der Objekthintergrund ist damit im Gegensatz zur Einrichtung nach DE-PS 1 083 065 vollständig dunkel.

Wird das bewegliche λ/4 -Plättchen um 45° um die optische Achse gedreht und damit wirkungslos gemacht, oder komplett aus dem Strahlengang geschoben, dann erhält man ein Bild in Durchlichtbeleuchtung.

An der Oberfläche des Objekts 2 reflektiertes Licht wird jetzt vom Analysator 7 blockiert. Dagegen wird das am Objekt 2 vorbei vom Reflektor 9 reflektierte Licht durch die λ/4 -Folie 10 insgesamt um 90° in der Polarisationsrichtung gedreht und vom Analysator 7 vollständig zur Bildebene 3 durchgelassen, der Objekthintergrund erscheint also mit voller Helligkeit.

In der technischen Ausführung ist es zur Reduzierung der Teilezahl und der störend reflektierenden Oberflächen vorteilhaft, den Strahlteiler 5 mit Polarisator 6 und Analysator 7 zu einem polarisierenden Strahlteiler zusammenzufassen.

Reflektor 9 und die als zweite die Polarisationsrichtung drehende Einrichtung 10 dienende λ/4 -Folie sind ohne weiteres in großen Formaten bis zu mehreren Quadratmetern erhältlich und können auf beliebigen planen Objektträgern 12 aufgebracht werden.

Ein Meßmikroskop mit einem Scanningtisch von je 20 cm Stellweg in x- und y-Richtung beispielsweise kann mit einer erfindungsgemäßen Einrichtung zur Durchlichtbeleuchtung genutzt werden, wobei der Scanningtisch keine Probleme wegen großflächiger transparenter Durchbrüche für den Beleuchtungstrahlengang aufweist, da nur auf seine ebene Objektträgerfläche eine Kombination von Reflektor 9 und λ/4 -Folie 10 aufzubringen ist.

Ein Koordinatenmeßgerät, bei dem das Objekt 2 auf einem festen Tisch angeordnet ist und der optische Taster bewegt wird, kommt ohne einen aufwendigen großformatigen Leuchtkasten, der notwendigerweise mehrere Zentimeter Bauhöhe benötigt und nur schwer eine über seine Fläche konstante Beleuchtungsscharakeristik erhält, aus.

Auch eine mechanisch dem optischen Taster nachgeführte Durchlichtbeleuchtungseinrichtung mit großem Aufwand wird nicht benötigt.

Die auf dem Tisch aufzubringende, nur wenige Millimeter dicke Kombination von Reflektor 9 und λ/4 -Folie 10 genügt in Verbindung mit den erfindungsgemäß im optischen Taster vorgesehenen Teilen Polarisator 6, Analysator 7 und beweglichem λ/4 -Plättchen 8 zur kontraststarken wahlweisen Durchlicht- und/oder Auflichtbeleuchtung. Besonders geeignet ist die Einrichtung zur Untersuchung von gestanzten, erodierten oder geätzten Blechteilen und ähnlichem, wobei Kanten und Durchbrüche damit sowohl an der Oberseite wie an der Unterseite des Teiles in einer Aufspannung im Auflicht und im Durchlicht angetastet werden können.

## Patentansprüche

1. Optische Einrichtung zur wahlweisen Erzielung einer Durch- und/oder Auflichtbeleuchtung eines Objektes (2), bestehend aus einer Beleuchtungs- und Abbildungseinrichtung (1, 3, 4, 5) in Auflichtbauart, ergänzt durch einen Polarisator (6) im Beleuchtungsstrahlengang, einen unter 90° zum Polarisator (6) orientierten Analysator (7) im Abbildungsstrahlengang, eine verstellbare, die Polarisationsrichtung drehende Einrichtung (8) im gemeinsamen Teil von Beleuchtungs- und Abbildungsstrahlengang zwischen Polarisator (6) und Analysator (7) vor dem Objekt (2) und einen hinter dem Objekt (2) angeordneten Reflektor (9), **dadurch gekennzeichnet**, daß der Reflektor im wesentlichen nicht depolarisierend wirkt und eine zweite, die Polarisationsrichtung drehende, unter 45° zum Polarisator (6) orientierte Einrichtung (10) zwischen Objekt (2) und Reflektor (9) angeordnet ist und daß die Beleuchtung bei einer Orientierung der die Polarisationsrichtung drehenden Einrichtung (8) unter 45° zum Polarisator (6) im Auflicht und unter 0° oder 90° zum Polarisator (6) im Durchlicht erfolgt.

2. Optische Einrichtung nach Anspruch 1, **dadurch ge****kennzeichnet**, daß λ/4 -Plättchen oder -Folien als die Polarisationsrichtung drehende Einrichtungen (8, 10) verwendet sind.

3. Optische Einrichtung nach Anspruch 1, **dadurch ge****kennzeichnet**, daß die verstellbare die Polarisationsrichtung drehende Einrichtung (8) durch Drehen um die optische Achse verstellt wird.

4. Optische Einrichtung nach Anspruch 1, **dadurch ge****kennzeichnet**, daß die verstellbare die Polarisationsrichtung drehende Einrichtung (8) durch Ein- und Ausfahren aus dem Strahlengang verstellt wird.

5. Optische Einrichtung nach Anspruch 1, **dadurch ge****kennzeichnet**, daß die Beleuchtungs- und Abbildungseinrichtung (1, 3, 4, 5) in Auflichtbauart einen Strahlteiler (5) enthält und daß der Polarisator (6) und der Analysator (7) in einer polarisierenden Strahlteilerfläche dieses Strahlteilers (5) vereinigt sind.

6. Optische Einrichtung nach Anspruch 1, **dadurch ge****kennzeichnet**, daß der Reflektor (9) ein metallischer Planspiegel ist.

7. Optische Einrichtung nach Anspruch 1, **dadurch ge****kennzeichnet**, daß der Reflektor (9) eine Reflexfolie ist.

8. Optische Einrichtung nach einem oder mehreren der Ansprüche 1 bis 7, **gekennzeichnet durch** die Verwendung für die optische Antastung mit einer Mehrkoordinatenmeßmaschine, wobei der Reflektor (9) eine Fläche der Größenordnung 1 cm² bis 10 m² aufweist.

## Claims

1. Optical device for optional attainment of a transillumination and/or epi-illumination of an object (2), consisting of an illuminating and imaging device (1, 3, 4, 5) in reflected light construction, supplemented by a polarizer (6) in the illumination beam path, an analyzer (7) positioned at 90° to the polarizer (6) in the imaging beam path, an adjustable device (8) turning the polarization direction in the mutual part of illumination beam path and imaging beam path between polarizer (6) and analyzer (7) in front of the object (2) and a reflector (9) positioned behind the object (2), **characterized** **in** **that** the reflector has no depolarizing action essentially and a second device (10) turning the polarization direction at 45° to the polarizer (6) is positioned between object (2) and reflector (9) and that the illumination occurs with an orientation of the device (8) turning the polarization direction at 45° to the polarizer (6) in the reflected light and at 0° or 90° to the polarizer (6) in the transmitted light.

2. Optical device according to claim 1, **characterized** **in that** λ/4 laminae or foils are used as the devices (8, 10) turning the polarization direction.

3. Optical device according to claim 1, **characterized** **in that** the adjustable device (8) turning the polarization direction is adjusted by being turned round the optical axis.

4. Optical device according to claim 1, **characterized** **in that** the adjustable device (8) turning the polarization direction is adjusted by being moved into and out of the beam path.

5. Optical device according to claim 1, **characterized** **in that** the illuminating and imaging device (1,3,4,5) contains in reflected light construction a beam splitter (5) and that the polarizer (6) and the analyzer (7) are combined in a polarizing beam splitter area of this beam splitter (5).

6. Optical device according to claim 1, **characterized** **in that** the reflector (9) is a metal plane mirror.

7. Optical device according to claim 1, **characterized** **in that** the reflector (9) is a reflex foil.

8. Optical device according to one or more of claims 1 through 7, **characterized by** use for optical scanning with a multi-coordinate measuring machine, with the reflector (9) having an area of a magnitude of 1 cm² to 10 m².

## Revendications

1. Dispostif optique pour l'obtention au choix de la transillumination et /ou de l'éclairage frontal direct d'un objet (2), se composant d'un dispositif d'éclairage et de reproduction (1, 3, 4 ,5) en construction de lumière incidente, complété par un polariseur (6) dans le faisceau d'éclairage, par un analyseur (7) dans le faisceau de reproduction orienté à moins de 90° par rapport au polariseur (6), par un dispositif (8) réglable tournant le sens de polarisation dans la partie commune du faisceau d'éclairage et de reproduction entre le polariseur (6) et l'analyseur (7) devant l'objet (2) et par un réflecteur (9) disposé derrière l'objet (2), **caractérisé en ce que** le réflecteur n'a pas une action importante de dépolarisation et qu'un deuxième dispositif (10) tournant le sens de polarisation, orienté à moins de 45° par rapport au polariseur (6) est installé entre l'objet (2) et le réflecteur (9) et en ce que, lors d'une orientation du dispositif (8) tournant le sens de polarisation l'éclairage a lieu au-dessous de 45° par rapport au polariseur (6) en lumière incidente (en projection frontale) et au-dessous de 0° ou de 90° par rapport au polarisateur (6) en transillumination.

2. Dispositif optique selon la revendication 1, **caractérisé en ce qu'**on utilise des lames ou des feuilles λ/4 en tant que dispositifs (8, 10) tournant le sens de polarisation.

3. Dispositif optique selon la revendication 1, **caractérisé en ce que** le dispositif (8) réglable tournant le sens de polarisation est réglé par une rotation autour de l'axe optique.

4. Dispositif optique selon la revendication 1, **caractérisé en ce que** le dispositif réglable (8) tournant le sens de polarisation est réglé par une entrée dans la marche des rayons et une sortie de celle-ci.

5. Dispositif optique selon la revendication 1, **caractérisé en ce que** le dispositif d'éclairage et de reproduction (1, 3, 4, 5) en construction de lumière incidente contient une lame séparatrice (5) et que le polariseur (6) ainsi que l'analyseur (7) sont réunis dans une surface polarisante de cette lame séparatrice (5).

6. Dispositif optique selon la revendication 1, **caractérisé en ce que** le réflecteur (9) est un miroir-plan métallique.

7. Dispositif optique selon la revendication 1, **caractérisé en ce que** le réflecteur (9) est une feuille réflexe.

8. Dispositif optique selon l'une ou plusieurs des revendications 1 à 7, **caractérisé par** l'utilisation pour le balayage optique avec une machine à mesurer à plusieurs coordonnées sachant que le réflecteur (9) présente une surface d'un ordre de grandeur entre 1 cm² et 10 m².
